# FASCICULE DE BREVET EUROPEEN

(11) **EP 3 782 734 B1**
(45) Date de publication et mention de la délivrance du brevet: **05.11.2025**
(21) Numéro de dépôt: 20191513.9
(22) Date de dépôt: 18.08.2020
(51) Int. Cl.: B03C 7/12, B03C 7/00, B29B 17/02

(54) **DISPOSITIF DE SÉPARATION ÉLECTROSTATIQUE, PROCÉDÉ DE SÉPARATION ET UTILISATION ASSOCIÉS**
VORRICHTUNG ZUR ELEKTROSTATISCHEN TRENNUNG, ENTSPRECHENDES TRENNVERFAHREN UND ENTSPRECHENDE VERWENDUNG
ELECTROSTATIC SEPARATION DEVICE, ASSOCIATED SEPARATION METHOD AND USE

(30) Priorité: 19.08.2019 FR 1909271
(43) Date de publication de la demande: 24.02.2021
(73) Titulaire: SKYTECH, 27940 Le Val d'Hazey (FR)
(72) Inventeur: SOMMEN, Pierre, Frédéric, Claude, 27120 PACY-SUR-EURE (FR)
(74) Mandataire: Lavoix

(56) Documents cités:
- IT-A1- RE20 110 106
- JP-A- 2002 204 980
- JP-A- 2003 311 183
- US-A- 3 009 573
- US-A1- 2016 038 950
- US-B1- 6 681 938

## Description

La présente invention concerne un dispositif de séparation électrostatique d'un mélange de granules de matériaux différents. L'invention concerne également un procédé de séparation mettant en œuvre le dispositif précédent, ainsi qu'une utilisation du dispositif pour une séparation.

Des dispositifs de séparation électrostatique sont déjà utilisés pour trier des matériaux granulaires mélangés provenant, par exemple, du broyage des déchets industriels. Généralement, la majeure partie des matériaux à séparer est constituée de matériaux isolants électriquement, et notamment de matériaux plastiques.

Par exemple, le recyclage de déchets électriques et/ou électroniques implique de séparer les différents composants avant de valoriser les matériaux obtenus. Il est souhaitable qu'une telle séparation soit la plus efficace possible pour obtenir une qualité sensiblement constante des matériaux recyclés.

Lorsque les matériaux à séparer présentent des densités égales ou très proches, les procédés de séparation basés sur la gravité sont trop imprécis et ne permettent pas d'obtenir des séparations satisfaisantes.

Pour cela, il est connu une technique consistant à broyer les matériaux isolants pour en faire des granules et de les séparer par effet électrostatique.

Dans une première étape, les granules sont chargés par effet triboélectrique dans un dispositif à vibration ou rotatif. Dans une deuxième étape, les granules chargés sont convoyés vers un dispositif de tri électrostatique dans lequel ils sont séparés par un champ électrique. A cette fin, les granules sont injectés par le haut du dispositif de tri où ils tombent entre deux électrodes.

Les granules chargés positivement sont attirés par l'anode (l'électrode négative), alors que les granules chargés négativement sont attirés par la cathode (l'électrode positive). Les granules ainsi déviés dans leur chute sont séparés et tombent dans une zone de collecte comprenant des collecteurs différents, disposés en bas du dispositif et au droit des électrodes.

Dans la zone de collecte, le nombre de compartiments varie afin d'optimiser la pureté recherchée. La matière la plus pure se trouve dans les compartiments situés aux extrémités de la zone de collecte, qui reçoivent les granules les plus fortement déviés, et la matière la plus mélangée se trouve dans les compartiments les plus centraux.

Il est courant de constater dans les séparateurs actuels que le taux de matière non séparée est compris entre 35% et 50%, c'est-à-dire que seulement 50% à 65% de matière est séparée en une seule passe avec un taux de pureté requis de, par exemple, 95%.

Pour pallier un tel inconvénient, il est connu de multiplier les passages de la matière non séparée dans le séparateur, dans le but de réduire artificiellement le taux de matière non séparée en bout de chaîne.

Ceci ne donne pas cependant entière satisfaction et produit un impact significatif sur le débit horaire de matière à séparer et augmente le temps et les coûts de séparation par rapport à une passe unique.

Pour améliorer le taux de séparation en une seule passe de dispositifs de séparation, il est connu d'augmenter de manière significative la hauteur de la zone de séparation, ou d'installer plusieurs zones de séparations les unes à la suite des autres.

Toutefois, l'encombrement spatial des dispositifs est alors fortement augmenté.

Il est également connu des montages des documents IT RE20 110 106 A1, US 6 681 938 B1, JP 2003/311183 A, JP 2002/204980 A et US 2016/038950 A1. Le document US3009573A décrit un dispositif de séparation électrostatique selon le préambule de la revendication 1.

Il existe donc un besoin pour un dispositif de séparation électrostatique d'un mélange de granules de matériaux différents permettant d'obtenir une séparation améliorée sans augmentation notable de l'encombrement du dispositif ou du temps nécessaire à la séparation.

A cet effet, l'invention a pour objet un dispositif de séparation électrostatique d'un mélange de granules de matériaux différents selon la revendication 1.

Selon des modes de réalisation particuliers, le dispositif de séparation comprend une ou plusieurs des caractéristiques 2 à 5, prise(s) isolément ou selon tout combinaison techniquement réalisable.

L'invention a également pour objet un procédé de séparation électrostatique d'un mélange de granules de matériaux différents selon la revendication 6.

Selon un mode de réalisation particulier, le procédé selon l'invention comprend la caractéristique suivante :
- le procédé comprend une étape préalable de charge d'au moins une partie des granules du mélange par triboélectricité, une partie des granules se chargeant positivement et une partie des granules se chargeant négativement, de sorte que les granules sont déviés entre les paires d'électrodes en direction des anodes s'ils sont chargés positivement et en direction des cathodes s'ils sont chargés négativement.

L'invention a en outre pour objet une utilisation selon la revendication 8.

L'invention sera mieux comprise à la lecture de la description qui suit, donnée uniquement à titre d'exemple et faite en référence aux dessins annexés, parmi lesquels :
- la figure 1 est une vue schématique en coupe d'un exemple de dispositif de séparation ;
- la figure 2 est une vue schématique en coupe du dispositif de la figure 1 lors de la mise en œuvre d'un procédé de séparation ;
- la figure 3 est une vue schématique d'un autre exemple de dispositif de séparation, et
- la figure 4 est une vue schématique d'encore un autre exemple de dispositif de séparation.

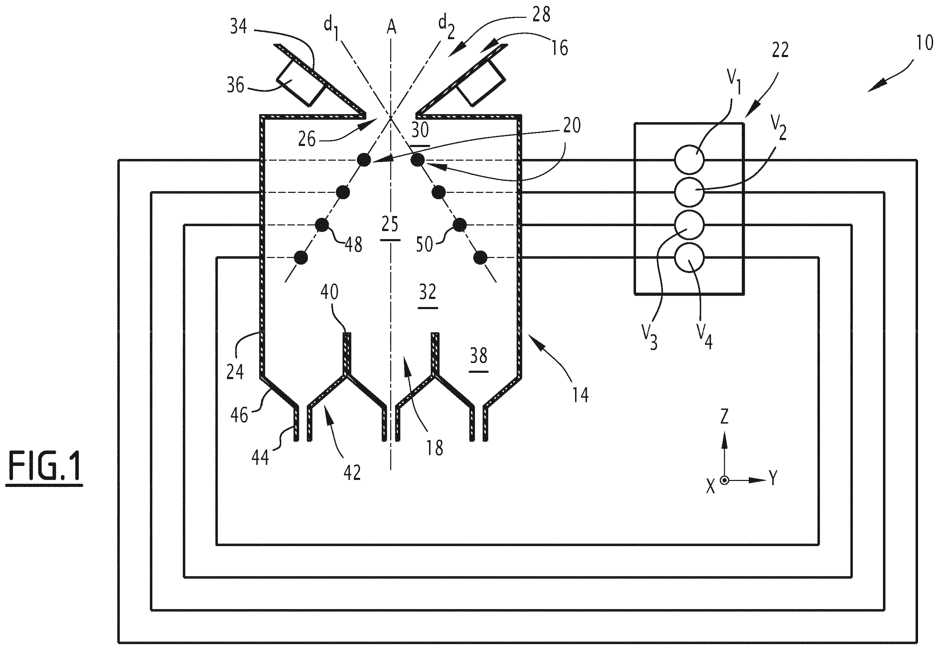

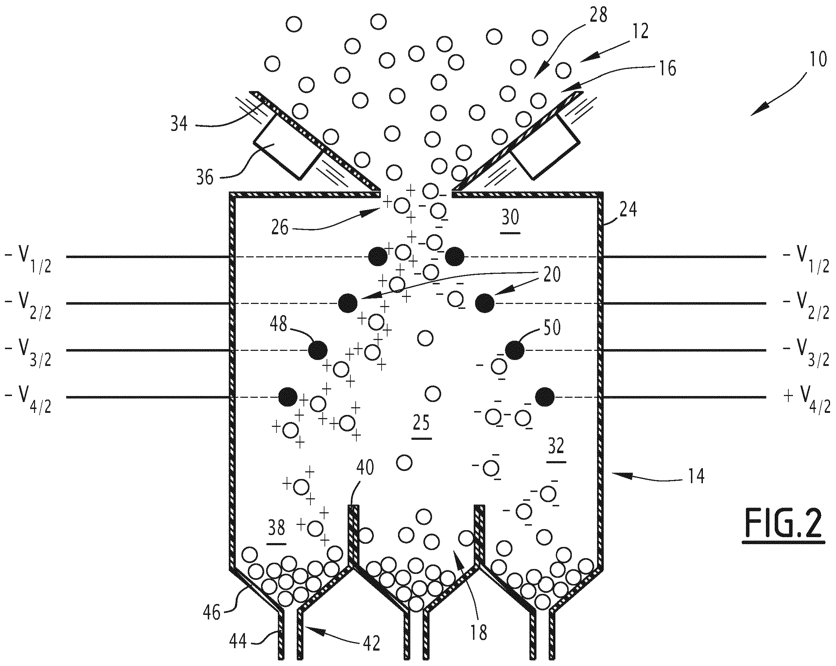

Un dispositif 10 de séparation est représenté sur les figures 1 et 2. Le dispositif 10 est adapté pour séparer un mélange 12 de granules.

Le dispositif 10 est décrit en référence à une direction d'élévation Z, orientée selon la gravité, ainsi qu'une direction longitudinale X et une direction transversale Y perpendiculaires entre elles et à la direction d'élévation Z.

Le dispositif 10 comprend une chambre 14 de séparation, un dispositif de chargement 16 du mélange 12, un dispositif de collecte 18 des granules, au moins deux paires 20 d'électrodes et un système de génération 22 d'une différence de potentiel.

Par l'expression « séparer le mélange de granules », il est entendu que le dispositif 10 est adapté pour trier au moins une partie des granules composant le mélange 12 selon une composition desdits granules.

Le mélange 12 de granules comprend des granules d'au moins deux matériaux différents.

Par le terme « granule », il est entendu une particule présentant une forme sensiblement compacte, composée d'au moins un matériau. Un granule présente des dimensions caractéristiques millimétriques. Par exemple, chaque granule présente des longueurs, mesurées selon chacune des directions, comprises entre 1 mm et 16 mm.

Le mélange 12 comprend notamment des granules de formes variées et de dimensions variées, par exemple selon une distribution normale de taille centrée autour des dimensions caractéristiques précédentes.

Par l'expression « des granules d'au moins deux matériaux différents », il est entendu que le mélange 12 comprend, par exemple, au moins une première population de granules comprenant majoritairement un premier matériau et une deuxième population de granules comprenant majoritairement un deuxième matériau, le deuxième matériau étant distinct du premier matériau.

Par l'expression « majoritairement », il est entendu que chaque granule de la première population comprend par exemple au moins 90% en masse du premier matériau ou que chaque granule de la deuxième population comprend au moins 90% en masse du deuxième matériau.

Suivant l'exemple proposé, le premier matériau et le deuxième matériau sont des matériaux isolants électriquement, notamment des matériaux plastiques.

Par exemple, le premier matériau et le deuxième matériau sont choisis dans le groupe constitué du polypropylène, du polystyrène, du polyamide, de l'acrylonitrile butadiène styrène et du polyéthylène.

Le mélange 12 de granules est, par exemple, obtenu par broyage, en particulier de déchets, plus spécifiquement de déchets industriels, issus d'équipement électriques et/ou électroniques ou de véhicule hors d'usage.

La chambre 14 de séparation est un compartiment adapté pour contenir et isoler le mélange 12 pendant la séparation des granules.

Notamment, la chambre 14 de séparation est adaptée pour protéger le mélange 12 de granules des variations de température, de pression, d'humidité et de champ électrique à l'extérieur de la chambre 14, au cours de la séparation.

La chambre 14 de séparation comprend des parois 24 qui délimitent un volume intérieur 25 et définissent une entrée 26.

La chambre 14 comprend un dispositif d'introduction 28 des granules par l'entrée 26.

La chambre 14 de séparation contient le dispositif de collecte 18 des granules.

La chambre de séparation 14 s'étend selon un axe central A, sensiblement parallèle à la direction d'élévation Z, passant par l'entrée 26 et le dispositif de collecte 18 des granules.

La chambre 14 comprend une partie haute 30 et une partie basse 32, relativement à la gravité.

La partie haute 30 est, par exemple, la partie de la chambre 14 s'étendant au-dessus des paires d'électrodes 20, selon la direction d'élévation Z.

La partie basse 32 est, par exemple, la partie de la chambre 14 s'étendant en dessous des paires 20 d'électrodes, selon la direction d'élévation Z.

L'entrée 26 est une ouverture dans les parois 24 située dans la partie haute 30 de la chambre 14, relativement à la direction d'élévation Z.

L'entrée 26 est munie du dispositif d'introduction 28 des granules.

Le dispositif d'introduction 28 est adapté pour introduire les granules dans la chambre de séparation 14 à travers l'entrée 26.

Le dispositif d'introduction 28 est, selon l'exemple représenté sur les figures 1 et 2, une trémie vibrante, comprenant des flancs 34 de trémie et au moins un actionneur 36.

Les flancs 34 de trémie définissent un espace interne tronconique, d'axe parallèle à la direction d'élévation Z et convergent vers l'entrée 26 de la chambre 14.

Le ou les actionneurs 36 sont des moteurs vibrants, agencés pour faire vibrer les flancs 34, pour faciliter l'écoulement des granules vers l'entrée 26.

Selon d'autres modes de réalisation, le dispositif d'introduction 28 des granules comprend un convoyeur à bande ou une table vibrante.

Le dispositif de collecte 18 des granules est contenu dans le volume intérieur 25, et situé dans la partie basse 32 de la chambre 14.

Le dispositif de collecte 18 des granules comprend une pluralité de compartiments 38 alignés le long de la partie basse 32 de la chambre 14, selon la direction transversale Y.

Le dispositif de collecte 18 des granules est adapté pour recevoir les granules après la traversée de la chambre 14 par les granules.

Les compartiments 38 sont des espaces de réception des granules, sensiblement parallélépipédiques, alignés le long de la direction transversale Y et séparés les uns des autres par des volets 40.

Chaque compartiment 38 est agencé pour recevoir une partie des granules de la chambre 14.

La partie des granules reçue par le compartiment 38 dépend d'une déviation des granules dans la chambre 14 et d'une position du compartiment 38 dans la partie basse 32 de la chambre 14.

Avantageusement, chaque compartiment 38 comprend un dispositif d'évacuation 42 des granules, adapté pour extraire continument les granules reçus par le compartiment 38.

Les dispositifs d'évacuation 42 permettent au dispositif 10 de séparation de fonctionner en continu.

Chaque dispositif d'évacuation 42 comprend, par exemple, un tuyau 44 débouchant dans le fond du compartiment 38 par un évasement 46, ainsi qu'un organe de circulation (non représenté) des granules dans le tuyau 44, comme par exemple une pompe.

Le dispositif de chargement 16 est adapté pour charger les granules du mélange 12 avant l'introduction dans la chambre 14, pour permettre la séparation des granules.

Par l'expression « charger les granules », il est entendu que le dispositif de chargement 16 est adapté pour générer des charges électriques de surface sur une surface externe d'au moins une partie des granules, grâce au phénomène de triboélectricité.

La triboélectricité est un phénomène survenant lors de frottements de surfaces de deux matériaux isolants différents, au cours desquels des transferts d'électrons ont lieu d'une des surfaces vers l'autre, ce qui entraîne l'apparition de charges de surfaces de signes opposés sur les deux surfaces.

Le dispositif de chargement 16 est adapté pour charger les granules en générant des frottements entre les granules des populations différentes.

Le dispositif de chargement 16 est ainsi adapté pour générer des charges surfaciques sur les granules de la première population et des charges surfaciques de signe opposé sur les granules de la deuxième population.

Avantageusement, le dispositif de chargement 16 comprend des parois recouvertes d'un matériau isolant, le matériau isolant étant adapté pour générer des charges de surfaces par triboélectricité.

Cela est notamment possible lorsque les matériaux composant les granules permettent de choisir un matériau isolant apte à charger les granules avec des charges de surface de signes différents.

Le dispositif de chargement 16 est alors également adapté pour charger les granules par frottements entre les granules et les parois du dispositif de chargement 16.

Dans le mode de réalisation représenté sur les figures 1 et 2, le dispositif de chargement 16 est le dispositif d'introduction 28 des granules, c'est-à-dire une trémie vibrante, les flancs 34 de trémie constituant des parois du dispositif de chargement 16.

Les actionneurs 36 sont adaptés pour faire vibrer les flancs 34 de la trémie, générant des frottements entre les granules contenus dans l'espace interne de la trémie, ainsi qu'entre les granules et les flancs 34 de la trémie.

Selon une variante non représentée, le dispositif de chargement 16 et le dispositif d'introduction 28 sont distincts.

Par exemple, le dispositif de chargement 16 est directement situé dans la chambre 14, et comprend par exemple une soufflerie adaptée pour agiter les granules dans la chambre 14 et à provoquer des frottements qui entrainent le chargement des granules par triboélectricité.

Selon un mode de réalisation représenté sur les figures 1 et 2, le dispositif 10 comprend exactement quatre paires 20 d'électrodes.

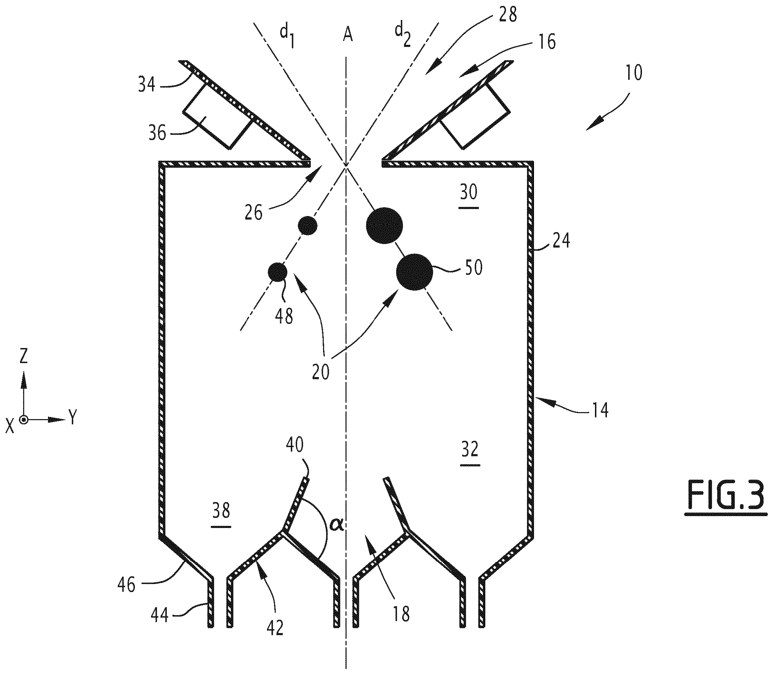

Selon un autre mode de réalisation représenté sur la figure 3, le dispositif 10 comprend exactement deux paires 20 d'électrodes.

Les paires 20 d'électrodes sont agencées dans le volume intérieur 25 de la chambre 14, de part et d'autre de l'axe central A, entre l'entrée 26 et le dispositif de collecte 18 des granules.

Les paires 20 d'électrodes sont disposées successivement selon la direction d'élévation Z, c'est à dire que les paires 20 d'électrodes sont disposées l'une après l'autre.

Chaque paire 20 d'électrode comprend une anode 48 et une cathode 50, disposées de part et d'autre de l'axe central A.

Les anodes 48 de deux paires 20 successives sont séparées l'une de l'autre par un premier pas, mesuré selon la direction d'élévation Z.

Les cathodes 50 de deux paires 30 successives sont séparées l'une de l'autre par un deuxième pas, mesuré selon la direction d'élévation Z.

Le premier pas et le deuxième pas sont, selon l'exemple représenté sur les figures 1 et 2, égaux.

Les paires 20 d'électrodes sont adaptées pour générer un champ électrique au niveau de l'axe central A.

Le champ électrique généré par les paires 20 d'électrodes permet de dévier les granules traversant la chambre 14.

Chaque anode 48 est une électrode adaptée pour recevoir un potentiel électrique imposé par le système de génération 22.

Les anodes 48 des paires 20 d'électrodes sont toutes disposées d'un même côté de l'axe central A.

Chaque cathode 50 est une électrode adaptée pour recevoir un potentiel électrique imposé par le système de génération 22, le potentiel électrique de la cathode 50 étant supérieur au potentiel électrique de l'anode 48 correspondante de la paire 20 d'électrodes.

Les cathodes 50 des paires 20 d'électrodes sont toutes disposées d'un même côté de l'axe central A, opposé au côté des anodes 48.

Chaque anode 48 et chaque cathode 50 présente, selon l'exemple représenté sur les figures 1 et 2, une forme cylindrique.

La forme cylindrique présente un axe central orthogonal à la direction d'élévation Z.

La forme cylindrique des anodes 48 et des cathodes 50 est avantageuse car elle comprend peu de sommets présentant les angles aigus, ce qui réduit fortement l'effet couronne qui accentue le risque de décharge au niveau de ces sommets. Ainsi, la forme cylindrique permet d'appliquer aux anodes 48 et aux cathodes 50 des potentiels d'amplitudes plus importantes sans dépasser la tension de claquage de l'air.

De plus, la forme cylindrique permet de mieux contrôler le champ électrique localement par rapport à des électrodes planes, car elle permet une meilleure localisation du potentiel électrique, ce qui augmente les possibilité d'ajustement de la répartition des potentiels électriques dans la chambre 14.

Enfin, selon un mode de réalisation (non représenté), les anodes 48 et les cathodes 50 sont montées mobiles en rotation autour de leur axe central respectif, et comprennent une brosse de nettoyage respective située, par exemple, du côté opposé à l'axe central A. Cela permet un nettoyage en continu des anodes 48 et des cathodes 50 au cours du fonctionnement du dispositif 10, pour éviter un encrassement des électrodes et un effet d'écrantage, ce qui est rendu possible notamment par la forme cylindrique des anodes 48 et des cathodes 50.

Avantageusement, les axes des anodes 48 et les axes des cathodes 50 sont tous parallèles entre eux.

Selon un mode de réalisation, les axes de l'anode 48 et de la cathode 50 de chaque paire 20 d'électrode s'étendent par exemple à la même hauteur dans la chambre 14.

Selon un mode de réalisation, les axes de l'anode 48 et la cathode 50 de chaque paire 20 d'électrodes s'étendent symétriquement par rapport à l'axe central A.

Selon un mode de réalisation représenté sur les figures 1 et 2, l'anode 48 et la cathode 50 de chaque paire 20 d'électrode présentent les mêmes dimensions.

Selon un mode de réalisation représenté sur la figure 3, l'anode 48 et la cathode 50 de chaque paire 20 d'électrodes présentent des dimensions différentes l'une de l'autre, par exemple des diamètres différents.

Selon un mode de réalisation, l'anode 48 et la cathode 50 de chaque paire 20 d'électrodes sont portées à des potentiels d'amplitudes égales et de signes opposés.

Selon un autre mode de réalisation, l'anode 48 et la cathode 50 sont portées à des potentiels d'amplitudes différentes et de signes opposés.

Les dimensions des électrodes et les amplitudes des potentiels électriques appliqués aux électrodes sont déterminées de façon à améliorer la séparation des granules.

Avantageusement, les paires 20 d'électrodes sont agencées dans la chambre 14 de manière divergente.

Par l'expression « divergente », il est entendu qu'un écartement, mesuré selon la direction transversale Y, séparant l'anode 48 de la cathode 50 de chaque paire 20 d'électrodes est croissant depuis l'entrée 26 de la chambre 14 en direction du dispositif de collecte 18 des granules.

L'arrangement des paires 20 d'électrodes de manière divergente permet d'augmenter la différence de potentiel entre l'anode 48 et la cathode 50 des paires 20 d'électrodes proches du dispositif de collecte 18, tout en maintenant l'amplitude du champ électrique en dessous de la rigidité diélectrique de l'air dans la chambre 14. Cela permet d'améliorer la séparation des granules au voisinage de la partie basse 32 de la chambre 14.

Selon un mode de réalisation représenté sur les figures 1 et 2, les axes des cathodes 50 sont alignés sur une même droite, dite première droite d₁, dans un plan orthogonal aux axes des cathodes 50.

Selon un mode de résiliation représenté sur les figure 1 et 2, les axes des anodes 48 sont alignés sur une même droite, dite deuxième droite d₂, dans un plan orthogonal aux axes des anodes 48.

La première droite d₁ et la deuxième droite d₂ forment respectivement avec l'axe central A un premier angle α₁ et un deuxième angle α₂.

Le premier angle α₁ et le deuxième angle α₂ sont, par exemple, compris entre 0° et 45°.

Selon un mode de réalisation, le premier angle α₁ et le deuxième angle α₂ sont égaux.

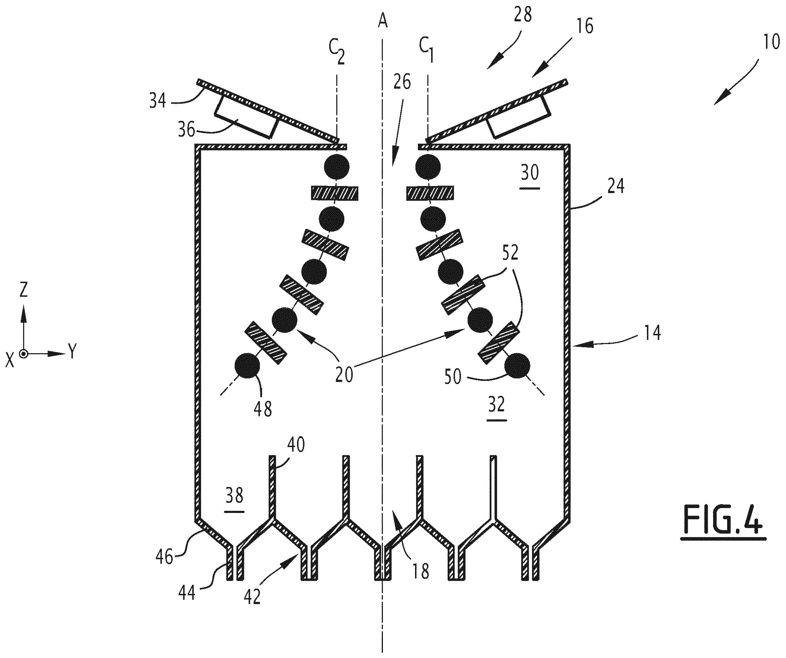

Selon un mode de réalisation représenté sur la figure 4, les axes des cathodes 50 sont disposés le long d'une première courbe C₁, par exemple une courbe parabolique ou une courbe hyperbolique, dans un plan orthogonal aux axes des cathodes 50.

Selon un mode de réalisation représenté sur la figure 4, les axes des anodes 48 sont disposés le long d'une deuxième courbe C₂, par exemple une courbe parabolique ou une courbe hyperbolique, dans un plan orthogonal aux axes des anodes 48.

Le système de génération 22 est adapté pour générer une différence de potentiel électrique entre l'anode 48 et la cathode 50 de chaque paire 20 d'électrodes, de façon à former dans la chambre 14 un champ électrique dérivant de des différences de potentiel.

Le champ électrique formé a une intensité suffisante pour dévier les granules présentant une charge de surface et les diriger vers différents compartiments 38 du dispositif de collecte 18, pour mettre en œuvre la séparation.

Ainsi, le système de génération 22 est adapté pour dévier les granules présentant une charge de surface positive vers les anodes 48 et les granules présentant une charge de surface négative vers les cathodes 50, comme représenté sur la figure 2.

Selon un mode de réalisation, les différences de potentiel appliquées entre l'anode 48 et la cathode 50 de chaque paire 20 d'électrodes par le système de génération 22 sont croissantes d'une paire 20 d'électrode à la suivante, de l'entrée 26 vers le dispositif de collecte 18.

Selon un mode de réalisation, les potentiels électriques générés dans l'anode 48 et la cathode 50 de chaque paire 20 d'électrodes par le système de génération 22 sont d'amplitudes égales et de signes opposés.

Avantageusement, le système de génération 22 est adapté pour générer dans chaque anode 48 et chaque cathode 50 des potentiels électriques déterminés de façon à ce que le champ électrique soit d'amplitude sensiblement constante le long de l'axe central A, entre les paires 20 d'électrodes, et sensiblement orienté selon la direction transversale Y.

Un tel arrangement permet d'améliorer la séparation des granules.

Avantageusement, les potentiels électriques de l'anode 48 et de la cathode 50 sont déterminés en fonction de l'écartement séparant l'anode 48 de la cathode 50, mesuré selon la direction transversale Y, de sorte que le champ électrique entre l'anode 48 et la cathode 50 ne dépasse pas la rigidité diélectrique de l'air contenu dans la chambre 14.

Cela permet d'éviter la formation d'un arc électrique dangereux dans la chambre 14.

Selon un mode de réalisation, le dispositif de génération 22 est adapté pour générer des potentiels électriques d'amplitudes différentes dans chacune des anodes 48 et dans chacune des cathodes 50.

Cette configuration permet un meilleur contrôle du champ électrique au niveau de l'axe central A.

Selon l'invention, comme représenté sur la figure 4, le dispositif de séparation 10 comprend un panneau isolant 52 disposé entre chacune des anodes 48 des paires 20 d'électrodes successives, et entre chacune des cathodes 50 des paires 20 d'électrodes successives.

Les panneaux isolants 52 sont des écrans réalisés dans un matériau isolant électriquement, comme par exemple en matière plastique, interposés entre les anodes 48 voisines et/ou entre les cathodes 50 voisines.

Les panneaux isolants 52 sont adaptés pour prévenir la formation d'un arc électrique entre deux anodes 48 ou entre deux cathodes 50 portées à des potentiels électriques d'amplitudes différentes, dont la différence de potentiel dépasserait la rigidité diélectrique de l'air contenu dans la chambre 14.

Un procédé de séparation électrostatique d'un mélange 12 de granules de matériaux différents, mettant en œuvre le dispositif 10 de séparation représenté sur les figures 1 et 2 va maintenant être décrit.

Le procédé comprend une étape préliminaire de chargement des granules par le dispositif de chargement 16, notamment par frottement des granules les uns contre les autres et/ou avec les parois du dispositif de chargement 16.

Au moins une partie des granules reçoit une charge de surface positive et au moins une partie des granules reçoit une charge de surface négative, en fonction des compositions respectives des granules.

Le procédé comprend également une étape de génération d'une différence de potentiel électrique entre l'anode 48 et la cathode 50 de chaque paire 20 d'électrodes, par le dispositif de génération 22.

Les différences de potentiel génèrent un champ électrique entre les anodes 48 et les cathodes 50 de chaque paire 20 d'électrode.

Le procédé comprend ensuite une étape d'introduction du mélange 12 de granules à travers l'entrée 26 de la chambre 14 de séparation, par le dispositif d'introduction 28. Les granules sont introduits et chutent à travers la chambre 14 sous l'effet de la gravité.

Le procédé comprend alors une étape de séparation d'au moins une partie des granules par déviation de chaque granule présentant une charge de surface positive vers les anodes 48 et une déviation de chaque granule présentant une charge de surface négative vers les cathodes 50.

Le procédé comprend enfin une étape de collecte des granules séparés dans le dispositif de collecte 18. Les granules sont reçus dans différents compartiments 38 en fonction de la déviation subie, et donc en fonction de la composition des granules.

Une manière d'évaluer l'efficacité de la séparation est exposée dans ce qui suit. D'autres manières existent et conduiraient aussi à montrer que la séparation avec le procédé décrit est plus efficace que la séparation effectuée par les procédés de l'état de la technique.

Une pureté d'un matériau A dans un des compartiments 38 d'indice n, notée P_{A}(n), est mesurée sur des granules prélevés dans le compartiment, par exemple par une méthode de mesure comme l'analyse spectrale infrarouge, et en calculant le rapport de la masse de granules du matériau A sur la masse totale prélevée.

Un critère de séparation peut être défini relativement à un niveau de pureté minimal attendu pour le matériau A. Le niveau de pureté minimal attendu est noté P_{A}^{min}. Par exemple, le niveau de pureté minimal attendu P_{A}^{min} est choisi strictement supérieur à 0,95.

Similairement, un niveau de pureté minimal attendu pour le matériau B est noté P_{B}^{min}.

L'efficacité de la séparation au cours du procédé de séparation est alors déterminée à partir du couple de critères de séparation pour chacune des deux matériaux A et B de granules à séparer (P_{A}^{min}, P_{B}^{min}).

A la fin du procédé décrit précédemment, les puretés P_{A}(n) et P_{B}(n) dans chacun des compartiments 38 sont calculées. Les compartiments 38 dans lesquels P_{A}(n) est strictement supérieur à P_{A}^{min} ou dans lesquels P_{B}(n) est strictement supérieur à P_{B}^{min} sont alors sélectionnés et constituent les compartiments 38 dans lesquels la matière considérée comme séparée.

Un taux de séparation τₛₑₚ, qui correspond à la quantité de matière séparée sur la quantité initiale de matière à séparer, est alors calculé.

Les dispositifs 10 et le procédé décrit permettent d'augmenter largement le taux de séparation τₛₑₚ, même après un seul passage dans le dispositif 10 de séparation, grâce à une meilleure configuration du champ électrique dans la chambre 14.

Le remplacement d'une paire d'électrodes unique par une pluralité de paires 20 d'électrodes distinctes permet d'augmenter le pouvoir de séparation du dispositif 10 sans augmenter la hauteur occupée dans la chambre 14.

L'amélioration du pouvoir de séparation permet de se dispenser de passages multiples de la matière dans le dispositif 10 de séparation, ce qui rend le processus plus efficace et rapide, et réduit le coût énergétique de la séparation. Cela permet de plus de se dispenser d'un dispositif de renvoi des granules vers l'entrée, nécessaire pour réaliser des passes multiples.

Le meilleur contrôle de la répartition du champ électrique dans la chambre permet aussi d'augmenter l'efficacité énergétique du procédé de séparation.

## Revendications

1. Dispositif (10) de séparation électrostatique d'un mélange (12) de granules de matériaux différents, le dispositif (10) comprenant :
- une chambre (14) de séparation présentant une entrée (26) et délimitant un volume intérieur (25),
- un dispositif de collecte (18) des granules disposé dans le volume intérieur (25), à l'opposé de l'entrée (26) selon une direction d'élévation (Z),
- au moins deux paires (20) d'électrodes disposées successivement selon la direction d'élévation (Z) dans le volume intérieur (25), entre l'entrée (26) et le dispositif de collecte (18), chaque paire (20) comprenant une anode (48) et une cathode (50), disposées de part et d'autre d'un axe central (A) s'étendant selon la direction d'élévation (Z), et
- au moins un système de génération (22), adapté pour appliquer une différence de potentiel électrique entre l'anode (48) et la cathode (50) de chaque paire (20),
chaque anode (48) et chaque cathode (50) de chaque paire (20) d'électrodes étant de forme cylindrique, la forme cylindrique présentant un axe de cylindre perpendiculaire à l'axe central (A), et
le dispositif (10) comprenant, en outre, des panneaux isolants (52) disposés entre les anodes (48) et les cathodes (50) de chaque paire (20) d'électrodes successives,
le dispositif étant **caractérisé en ce que** les panneaux isolantes (52) sont adaptés pour prévenir la formation d'un arc électrique entre deux anodes (48) et entre deux cathodes (50).

2. Dispositif selon la revendication 1, dans lequel l'anode (48) et la cathode (50) de chaque paire (20) d'électrodes sont séparées par un écartement, les écartements étant croissants depuis l'entrée (26) de la chambre (14) selon la direction d'élévation (Z), chaque écartement étant mesuré selon une direction perpendiculaire à la direction d'élévation (Z).

3. Dispositif selon la revendication 1 ou 2, dans lequel les anodes (48) des paires (20) d'électrodes sont alignées selon une même ligne, dite première ligne (d₁), et les cathodes (50) des paires (20) d'électrodes sont alignées sur une même ligne, dite deuxième ligne (d₂), la première ligne (d₁) et la deuxième ligne (d₂) formant chacune un angle (α₁, α₂) compris entre 0° et 45° avec l'axe central (A).

4. Dispositif selon l'une quelconque des revendications 1 à 3, dans lequel le système de génération (22) est propre à appliquer des différences de potentiel entre l'anode (48) et la cathode (50) de chaque paire (20) générant un champ électrique entre les paires (20) d'électrodes d'amplitude constante le long de l'axe central (A).

5. Dispositif selon l'une quelconque des revendication 1 à 4, dans lequel le système de génération (22) est propre à appliquer des différences de potentiel entre l'anode (48) et la cathode (50) de chaque paire d'électrodes (20) croissantes d'une paire (30) d'électrodes à la suivante, de l'entrée (26) vers le dispositif de collecte (18).

6. Procédé de séparation électrostatique d'un mélange (12) de granules de matériaux différents, le procédé mettant en œuvre un dispositif (10) de séparation électrostatique, le dispositif (10) comprenant :
- une chambre (14) de séparation présentant une entrée (26) et délimitant un volume intérieur (25),
- un dispositif de collecte (18) des granules disposé dans le volume intérieur (25), à l'opposé de l'entrée (26) selon une direction d'élévation (Z),
- au moins deux paires (20) d'électrodes disposées successivement selon la direction d'élévation (Z) dans le volume intérieur (25), entre l'entrée (26) et le dispositif de collecte (18), chaque paire (20) comprenant une anode (48) et une cathode (50), disposées de part et d'autre d'un axe central (A) s'étendant selon la direction d'élévation (Z), et
- au moins un système de génération (22), adapté pour appliquer une différence de potentiel électrique entre l'anode (48) et la cathode (50) de chaque paire (20) d'électrodes,
chaque anode (48) et chaque cathode (50) de chaque paire (20) d'électrodes étant de forme cylindrique, la forme cylindrique présentant un axe de cylindre perpendiculaire à l'axe central (A),
le dispositif (10) comprenant, en outre, des panneaux isolants (52) disposés entre les anodes (48) et les cathodes (50) de chaque paire (20) d'électrodes successives, les panneaux isolantes (52) étant adaptés pour prévenir la formation d'un arc électrique entre deux anodes (48) et entre deux cathodes (50), le procédé comprenant les étapes suivantes :
- introduction du mélange (12) de granules par l'entrée (26) de la chambre (14),
- génération d'une différence de potentiel électrique entre l'anode (48) et la cathode (50) de chaque paire (20) d'électrodes,
- séparation d'au moins une partie des granules, et
- collecte des granules séparés dans le dispositif de collecte (18).

7. Procédé selon la revendication 6, comprenant une étape préalable de charge d'au moins une partie des granules du mélange (12) par triboélectricité, une partie des granules se chargeant positivement et une partie des granules se chargeant négativement, de sorte que les granules sont déviés entre les paires (20) d'électrodes en direction des anodes (48) s'ils sont chargés positivement et en direction des cathodes (50) s'ils sont chargés négativement.

8. Utilisation d'un dispositif (10) de séparation électrostatique pour séparer un mélange (12) comprenant des granules de matériaux différents,
le dispositif comprenant :
- une chambre de séparation (14) présentant une entrée (26) et délimitant un volume intérieur (25),
- un dispositif de collecte (18) des granules disposé dans le volume intérieur (25), à l'opposé de l'entrée (26) selon une direction d'élévation (Z),
- au moins deux paires (20) d'électrodes disposées successivement selon la direction d'élévation (Z) dans le volume intérieur (25), entre l'entrée (26) et le dispositif de collecte (18), chaque paire (20) comprenant une anode (48) et une cathode (50), disposées de part et d'autre d'un axe central (A) s'étendant selon la direction d'élévation (Z), et
- au moins un système de génération (22), adapté pour appliquer une différence de potentiel électrique entre l'anode (48) et la cathode (50) de chaque paire, les matériaux des granules étant choisis dans le groupe constitué du polypropylène, du polystyrène, du polyamide, de l'acrylonitrile butadiène styrène et du polyéthylène,
chaque anode (48) et chaque cathode (50) de chaque paire (20) d'électrodes étant de forme cylindrique, la forme cylindrique présentant un axe de cylindre perpendiculaire à l'axe central (A),
le dispositif (10) comprenant, en outre, des panneaux isolants (52) disposés entre les anodes (48) et les cathodes (50) de chaque paire (20) d'électrodes successives, les panneaux isolantes (52) étant adaptés pour prévenir la formation d'un arc électrique entre deux anodes (48) et entre deux cathodes (50).

## Patentansprüche

1. Vorrichtung (10) zum elektrostatischen Trennen eines Gemischs (12) aus Granulat von unterschiedlichen Materialien, die Vorrichtung (10) umfassend:
- eine Trennkammer (14), die einen Eingang (26) aufweist und ein inneres Volumen (25) begrenzt,
- eine Granulatsammelvorrichtung (18), die in dem inneren Volumen (25) gegenüber dem Eingang (26) entlang einer Erhebungsrichtung (Z) angeordnet ist,
- mindestens zwei Paare (20) von Elektroden, die aufeinanderfolgend entlang der Erhebungsrichtung (Z) in dem inneren Volumen (25) zwischen dem Eingang (26) und der Sammelvorrichtung (18) angeordnet sind, jedes Paars (20) umfassend eine Anode (48) und eine Kathode (50), die auf beiden Seiten einer Mittelachse (A) angeordnet sind, die sich entlang der Erhebungsrichtung (Z) erstreckt, und
- mindestens ein Generatorsystem (22), das angepasst ist, um eine elektrische Potentialdifferenz zwischen der Anode (48) und der Kathode (50) von jedem Paar (20) anzulegen,
jede Anode (48) und jede Kathode (50) jedes Paars (20) von Elektroden zylinderförmig ist, wobei die Zylinderform eine Zylinderachse senkrecht zu der Mittelachse (A) aufweist, und
die Vorrichtung (10) ferner umfassend isolierende Platten (52), die zwischen den Anoden (48) und Kathoden (50) von jedem Paar (20) aufeinanderfolgender Elektroden angeordnet sind,
wobei die Vorrichtung **dadurch gekennzeichnet ist, dass** die isolierenden Platten (52) angepasst sind, um die Bildung eines Lichtbogens zwischen zwei Anoden (48) und zwischen zwei Kathoden (50) zu verhindern.

2. Vorrichtung nach Anspruch 1, wobei die Anode (48) und die Kathode (50) von jedem Paar (20) von Elektroden durch einen Abstand getrennt sind, wobei die Abstände von dem Eingang (26) der Kammer (14) entlang der Erhebungsrichtung (Z) zunehmen, wobei jeder Abstand entlang einer Richtung senkrecht zu der Erhebungsrichtung (Z) gemessen wird.

3. Vorrichtung nach Anspruch 1 oder 2, wobei die Anoden (48) der Paare (20) von Elektroden entlang einer gleichen Linie ausgerichtet sind, bezeichnet als erste Linie (d₁), und die Kathoden (50) der Paare (20) von Elektroden auf einer gleichen Linie ausgerichtet sind, bezeichnet als zweite Linie (d₂), wobei die erste Linie (d₁) und die zweite Linie (d₂) jeweils einen Winkel (α₁, α₂) zwischen 0° und 45° mit der Mittelachse (A) einschließen.

4. Vorrichtung nach einem der Ansprüche 1 bis 3, wobei das Generatorsystem (22) geeignet ist, um Potentialdifferenzen zwischen der Anode (48) und der Kathode (50) von jedem Paar (20) anzulegen, die ein elektrisches Feld zwischen den Paaren (20) von Elektroden mit konstanter Amplitude entlang der Mittelachse (A) erzeugen.

5. Vorrichtung nach einem der Ansprüche 1 bis 4, wobei das Generatorsystem (22) geeignet ist, um Potentialdifferenzen zwischen der Anode (48) und der Kathode (50) von jedem Paar (20) von Elektroden anzulegen, die von einem Paar (30) von Elektroden zum nächsten von dem Eingang (26) zur Sammelvorrichtung (18) ansteigen.

6. Verfahren zum elektrostatischen Trennen eines Gemischs (12) aus Granulat von unterschiedlichen Materialien, wobei das Verfahren eine Vorrichtung (10) zum elektrostatischen Trennen einsetzt, die Vorrichtung (10) umfassend:
- eine Trennkammer (14), die einen Eingang (26) aufweist und ein inneres Volumen (25) begrenzt,
- eine Granulatsammelvorrichtung (18), die in dem inneren Volumen (25) gegenüber dem Eingang (26) entlang einer Erhebungsrichtung (Z) angeordnet ist,
- mindestens zwei Paare (20) von Elektroden, die aufeinanderfolgend entlang der Erhebungsrichtung (Z) in dem inneren Volumen (25) zwischen dem Eingang (26) und der Sammelvorrichtung (18) angeordnet sind, jedes Paar (20) umfassend eine Anode (48) und eine Kathode (50), die auf beiden Seiten einer Mittelachse (A) angeordnet sind, die sich entlang der Erhebungsrichtung (Z) erstreckt, und
- mindestens ein Generatorsystem (22), das angepasst ist, um eine elektrische Potentialdifferenz zwischen der Anode (48) und der Kathode (50) von jedem Paar (20) von Elektroden anzulegen,
jede Anode (48) und jede Kathode (50) von jedem Paar (20) von Elektroden eine zylindrische Form aufweist, wobei die zylindrische Form eine Zylinderachse senkrecht zu der Mittelachse (A) aufweist,
die Vorrichtung (10) ferner umfassend isolierende Platten (52), die zwischen den Anoden (48) und Kathoden (50) von jedem Paar (20) aufeinanderfolgender Elektroden angeordnet sind, wobei die isolierenden Platten (52) angepasst sind, um die Bildung eines Lichtbogens zwischen zwei Anoden (48) und zwischen zwei Kathoden (50) zu verhindern,
das Verfahren umfassend die folgenden Schritte:
- Einführen des Gemischs (12) aus Granulat durch den Eingang (26) der Kammer (14),
- Erzeugen einer elektrischen Potentialdifferenz zwischen der Anode (48) und der Kathode (50) von jedem Paar (20) von Elektroden,
- Trennung mindestens eines Teils des Granulats, und
- Sammeln des getrennten Granulats in der Sammelvorrichtung (18).

7. Verfahren nach Anspruch 6, umfassend einen vorherigen Schritt eines Ladens mindestens eines Teils des Granulats des Gemischs (12) durch Reibungselektrizität, wobei ein Teil des Granulats positiv und ein Teil des Granulats negativ geladen wird, sodass das Granulat zwischen den Paaren (20) von Elektroden in Richtung der Anoden (48), wenn sie positiv geladen sind, und in Richtung der Kathoden (50), wenn sie negativ geladen sind, abgelenkt werden.

8. Verwendung einer Vorrichtung (10) zum elektrostatischen Trennen zum Trennen eines Gemischs (12), umfassend Granulat von verschiedenen Materialien,
die Vorrichtung umfassend:
- eine Trennkammer (14), die einen Eingang (26) aufweist und ein inneres Volumen (25) begrenzt,
- eine Granulatsammelvorrichtung (18), die in dem inneren Volumen (25) gegenüber dem Eingang (26) entlang einer Erhebungsrichtung (Z) angeordnet ist,
- mindestens zwei Paare (20) von Elektroden, die aufeinanderfolgend entlang der Erhebungsrichtung (Z) in dem inneren Volumen (25) zwischen dem Eingang (26) und der Sammelvorrichtung (18) angeordnet sind, jedes Paar (20) umfassend eine Anode (48) und eine Kathode (50), die auf beiden Seiten einer Mittelachse (A) angeordnet sind, die sich entlang der Erhebungsrichtung (Z) erstreckt, und
- mindestens ein Generatorsystem (22), das angepasst ist, um eine elektrische Potentialdifferenz zwischen der Anode (48) und der Kathode (50) von jedem Paar anzulegen, wobei die Materialien des Granulats ausgewählt sind aus der Gruppe, bestehend aus Polypropylen, Polystyrol, Polyamid, Acrylnitril-Butadien-Styrol und Polyethylen,
jede Anode (48) und jede Kathode (50) von jedem Paar (20) von Elektroden eine zylindrische Form aufweist, wobei die zylindrische Form eine Zylinderachse senkrecht zu der Mittelachse (A) aufweist,
die Vorrichtung (10) ferner umfassend isolierende Platten (52), die zwischen den Anoden (48) und Kathoden (50) von jedem Paar (20) aufeinanderfolgender Elektroden angeordnet sind, wobei die isolierenden Platten (52) angepasst sind, um die Bildung eines Lichtbogens zwischen zwei Anoden (48) und zwischen zwei Kathoden (50) zu verhindern.

## Claims

1. An electrostatic separation device (10) for a mixture (12) of granules of different materials, the device (10) comprising:
- a separation chamber (14) having an inlet (26) and delimiting an inner volume (25),
- a collection device (18) for granules placed in the inner volume (25), opposite the inlet (26) in an elevation direction (Z),
- at least two pairs (20) of electrodes successively placed in the elevation direction (Z) in the inner volume (25), between the inlet (26) and the collection device (18), each pair (20) comprising an anode (48) and a cathode (50), placed on either side of a central axis (A) extending in the elevation direction (Z), and
- at least one generating system (22), suitable for applying a difference in electric potential between the anode (48) and the cathode (50) of each pair (20),
each anode (48) and each cathode (50) of each pair (20) of electrodes being of cylindrical, shape the cylindrical shape having a cylinder axis perpendicular to the central axis (A), and
the device (10) further comprising at least one insulating panel (52) placed between the anodes (48) and the cathodes (50) of two successive pairs (20) of electrodes,
the device (10) being **characterized in that** the insulating panel (52) are adapted to prevent the formation of an electric arc between two anodes (48) and between two cathodes (50).

2. The device according to claim 1, wherein the anode (48) and the cathode (50) of each pair (20) of electrodes are separated by a gap, the gaps increasing from the inlet (26) of the chamber (14) in the elevation direction (Z), each gap being measured in a direction perpendicular to the elevation direction (Z).

3. The device according to claim 1 or 2, wherein the anodes (48) of the pairs (20) of electrodes are aligned in a same row, called first row (d₁), and the cathodes (50) of the pairs (20) of electrodes are aligned in a same row, called second row (d₂), the first row (d₁) and the second row (d₂) each forming an angle (α₁, α₂) inclusively between 0° and 45° with the central axis (A).

4. The device according to any one of claims 1 to 3, wherein the generating system (22) is able to apply differences in potential between the anode (48) and the cathode (50) of each pair (20) generating an electric field between the pairs (20) of electrodes of constant amplitude along the central axis (A).

5. The device according to any one of claims 1 to 4, wherein the generating system (22) is able to apply differences in potential between the anode (48) and the cathode (50) of each pair (20) of electrodes increasing from one pair (30) of electrodes to the next, from the inlet (26) toward the collection device (18).

6. A method for electrostatic separation of a mixture (12) of granules of different materials, the method implementing an electrostatic separation device (10), the device (10) comprising:
- a separation chamber (14) having an inlet (26) and delimiting an inner volume (25),
- a collection device (18) for granules placed in the inner volume (25), opposite the inlet (26) in an elevation direction (Z),
- at least two pairs (20) of electrodes successively placed in the elevation direction (Z) in the inner volume (25), between the inlet (26) and the collection device (18), each pair (20) comprising an anode (48) and a cathode (50), placed on either side of a central axis (A) extending in the elevation direction (Z), and
- at least one generating system (22), suitable for applying a difference in electric potential between the anode (48) and the cathode (50) of each pair (20) of electrodes,
each anode (48) and each cathode (50) of each pair (20) of electrodes being of cylindrical, shape the cylindrical shape having a cylinder axis perpendicular to the central axis (A), and
the device (10) further comprising at least one insulating panel (52) placed between the anodes (48) and the cathodes (50) of two successive pairs (20) of electrodes,
the device (10) being **characterized in that** the insulating panel (52) are adapted to prevent the formation of an electric arc between two anodes (48) and between two cathodes (50),
the method comprising the following steps:
- introducing the mixture (12) of granules through the inlet (26) of the chamber (14),
- generating a difference in electric potential between the anode (48) and the cathode (50) of each pair (20) of electrodes,
- separating at least part of the granules, and
- collecting separated granules in the collection device (18).

7. The method according to claim 6, comprising a prior step for charging at least some of the granules of the mixture (12) by triboelectricity, a portion of the granules being positively charged and a portion of the granules being negatively charged, such that the granules are deflected between the pairs (20) of electrodes toward the anodes (48) if they are positively charged and toward the cathodes (50) if they are negatively charged.

8. A use of an electrostatic separation device (10) for separating a mixture (12) comprising granules of different materials,
the device comprising:
- a separation chamber (14) having an inlet (26) and delimiting an inner volume (25),
- a collection device (18) for granules placed in the inner volume (25), opposite the inlet (26) in an elevation direction (Z),
- at least two pairs (20) of electrodes successively placed in the elevation direction (Z) in the inner volume (25), between the inlet (26) and the collection device (18), each pair (20) comprising an anode (48) and a cathode (50), placed on either side of a central axis (A) extending in the elevation direction (Z), and
- at least one generating system (22), suitable for applying a difference in electric potential between the anode (48) and the cathode (50) of each pair, the materials of the granules being chosen from the group consisting of polypropylene, polystyrene, polyamide, acrylonitrile butadiene styrene and polyethylene,
each anode (48) and each cathode (50) of each pair (20) of electrodes being of cylindrical, shape the cylindrical shape having a cylinder axis perpendicular to the central axis (A), and
the device (10) further comprising at least one insulating panel (52) placed between the anodes (48) and the cathodes (50) of two successive pairs (20) of electrodes,
the device (10) being **characterized in that** the insulating panel (52) are adapted to prevent the formation of an electric arc between two anodes (48) and between two cathodes (50).
